# EUROPÄISCHE PATENTSCHRIFT

(11) **EP 2 735 059 B1**
(45) Veröffentlichungstag und Bekanntmachung des Hinweises auf die Patenterteilung: **18.03.2015**
(21) Anmeldenummer: 12727371.2
(22) Anmeldetag: 13.06.2012
(51) Int. Cl.: H01R 9/24, H04Q 1/14

(54) **ANSCHLUSSLEISTE UND SCHILDERRAHMEN**
CONNECTOR STRIP AND SHIELD FRAME
RÉGLETTE DE RACCORDEMENT ET PORTE-ÉTIQUETTE

(30) Priorität: 22.07.2011 DE 102011108373
(43) Veröffentlichungstag der Anmeldung: 28.05.2014
(73) Patentinhaber: Tyco Electronics Services GmbH, 8200 Schaffhausen (CH)
(72) Erfinder: NEUMETZLER, Heiko, 12623 Berlin (DE); BUSSE, Ralf-Dieter, 15366 Hoppegarten (DE)
(74) Vertreter: Zucker, Volker
(86) Internationale Anmeldenummer: PCT/EP2012/061228
(87) Internationale Veröffentlichungsnummer: WO 2013/013881

(56) Entgegenhaltungen:
- AU-A1- 2009 200 800
- DE-B- 1 029 445
- DE-C1- 19 744 662
- FR-A1- 2 665 044
- US-A- 5 741 153

## Beschreibung

Die Erfindung betrifft eine Anschlussleiste für die Telekommunikations- und Datentechnik mit einem Schilderrahmen.

Aus der DE 296 22 803 U1 ist eine Anschlussleiste bekannt, an der eine Entriegelungseinrichtung angeordnet werden kann, über die eine in die Anschlussleiste eingesetzte Steckeinrichtung entriegelt werden kann. Die Entriegelungseinrichtung weist einen Lagerbock auf, der in Öffnungen der Oberseite der äußeren Schmalseiten der Anschlussleiste eingesteckt ist. Der Lagerbock weist einen rechteckförmigen Grundkörper mit Durchbrüchen zum Einstecken von Steckziffern zur Durchnummerierung mehrerer nebeneinander liegenden Anschlussleisten auf.

Alternativ sind Schilderrahmen bekannt, die auf einer Anschlussleiste angeordnet sind. Dabei ist es auch bekannt, die Schilderrahmen schwenkbar an der Anschlussleiste anzuordnen, wobei die Schwenkachse parallel zu einer Längsrichtung der Anschlussleiste ist.

Aus der US 5,741,153 A ist eine Anschlussleiste mit einem Schilderrahmen für die Telekommunikations- und Datentechnik bekannt, wobei die Anschlussleiste mindestens eine erste Schnittstelle zur Aufnahme einer Steckziffer und mindestens eine zweite Schnittstelle zur Aufnahme des Schilderrahmens aufweist. Dabei weist die Anschlussleiste auf einer Rückseite Schneid-Klemm-Kontakte und auf einer gegenüberliegenden Vorderseite Buchsen auf. In die Öffnungen der Buchsen können dann Steckziffern gesteckt werden und an die Rückseite der Anschlussleiste kann dann der Schilderrahmen aufgesteckt werden.

Aus der FR 2 665 044 A1 ist eine Anschlussleiste mit einem Schilderrahmen bekannt, wobei der Schilderrahmen schwenkbar an einer Schnittstelle der Anschlussleiste angelenkt ist, wobei die Schwenkachse senkrecht zu einer Längsrichtung der Anschlussleiste ist.

Aus der AU 2009 200 800 A1 ist ein Schilderrahmen für eine Anschlussleiste bekannt, wobei der Schilderrahmen eine optische Freimachung aufweist.

Der Erfindung liegt das technische Problem zugrunde, eine Anschlussleiste zu schaffen, die eine verbesserte Kennzeichnung ermöglicht.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Die Anschlussleiste mit Schilderrahmen umfasst mindestens eine erste Schnittstelle zur Aufnahme einer Steckziffer und mindestens eine zweite Schnittstelle zur Aufnahme eines Schilderrahmens. Somit können beide Kennzeichnungsmöglichkeiten der Anschlussleiste zur Anwendung kommen.

Dabei weist der Schilderrahmen eine optische Freimachung auf, die sich im befestigten Zustand auf der Anschlussleiste oberhalb der Schnittstelle zur Aufnahme der Steckziffer befindet. Somit ist gewährleistet, dass die Steckziffer auch bei einem montierten Schilderrahmen gut erkennbar ist. Des Weiteren ermöglicht dies auch eine nachträgliche Montage eines Schilderrahmens, ohne die Steckziffer zu ziehen.

Die optische Freimachung kann als transparentes Fenster oder als Öffnung ausgebildet sein. Dabei kann vorgesehen sein, dass der Grundkörper des Schilderrahmens aus einem transparenten Werkstoff besteht, dessen Oberfläche mit Ausnahme der optischen Freimachung angerauht wird, so dass sich die Transparenz abschwächt.

In einer weiteren Ausführungsform ist das transparente Fenster linsenförmig gewölbt, beispielsweise halbzylinderförmig. Hierdurch entsteht ein Lupeneffekt, so dass die Steckziffern optisch vergrößert werden und somit besser ablesbar sind.

In einer weiteren Ausführungsform weist die erste Schnittstelle zur Aufnahme einer Steckziffer mindestens eine Führung und/oder ein Rastmittel auf. Dabei ist die Führung beispielsweise als Nut, insbesondere als T-förmige Nut, ausgebildet. Das Rastmittel korrespondiert vorzugsweise mit einem Rastmittel der Steckziffer, so dass die Steckziffer fest mit der Anschlussleiste verbunden ist. Vorzugsweise ist die Steckrichtung der Steckziffer senkrecht zu einer Oberseite der Anschlussleiste. Es sind aber auch Ausführungen möglich, wo die Steckrichtung parallel zur Oberseite ist. Der Vorteil der Variante mit einer Steckrichtung senkrecht zur Oberseite ist, dass das Stecken bzw. Ziehen der Steckziffer noch einfach möglich ist, wenn die Anschlussleiste in einer Verteilereinrichtung verbaut ist, wo sich oberhalb und unterhalb der Anschlussleiste weitere Anschlussleisten befinden.

In einer weiteren Ausführungsform ist die zweite Schnittstelle als mindestens ein zylinderförmiger oder polygoner Noppen ausgebildet. Dieser mindestens eine Noppen stellt dann vorzugsweise die Drehachse bzw. Schwenkachse des Schilderrahmens dar. Vorzugsweise wird die Schwenkachse durch zwei Noppen gebildet, die vorzugsweise an der Vorder- und Rückseite der Anschlussleiste unterhalb der ersten Schnittstelle angeordnet sind. Vorzugsweise und unabhängig von der Art der Dreh- bzw. Schwenkachse ist der Schwenkbewegung ein Endanschlag zugeordnet. Der Endanschlag ist dabei derart ausgebildet, dass eine Schwenkbewegung von der befestigten Ausgangsstellung des Schilderrahmens in die aufgeschwenkte Stellung auf beispielsweise 130 - 170° begrenzt ist, wobei weiter vorzugsweise der Schilderrahmen in der Endstellung verliersicher an der Schwenkachse angeordnet ist.

In einer weiteren Ausführungsform steht die Schwenkachse senkrecht zu einer Längsrichtung der Anschlussleiste. Dies erlaubt den Einsatz eines Schilderrahmens bei Verteilereinrichtungen mit einer hohen Anschlussdichte von Anschlussleisten, wo eine Schwenkachse parallel zur Längsrichtung aufgrund des geringen Platzes ober- und unterhalb der Anschlussleiste zu Schwierigkeiten führen könnte.

In einer weiteren Ausführungsform weist die Anschlussleiste mindestens zwei erste Schnittstellen und/oder mindestens zwei zweite Schnittstellen auf.

Die Erfindung wird nachfolgend anhand eines bevorzugten Ausführungsbeispiels näher erläutert. Die Fig. zeigen:
- Fig. 1: eine perspektivische Darstellung einer Anschlussleiste mit aufgeschwenktem Schilderrahmen
- Fig. 2: eine perspektivische Darstellung der Einzelheit E1 aus Fig. 1,
- Fig. 3: eine perspektivische Darstellung einer Steckziffer und
- Fig. 4: eine perspektivische Darstellung der Anschlussleiste mit befestigtem Schilderrahmen.

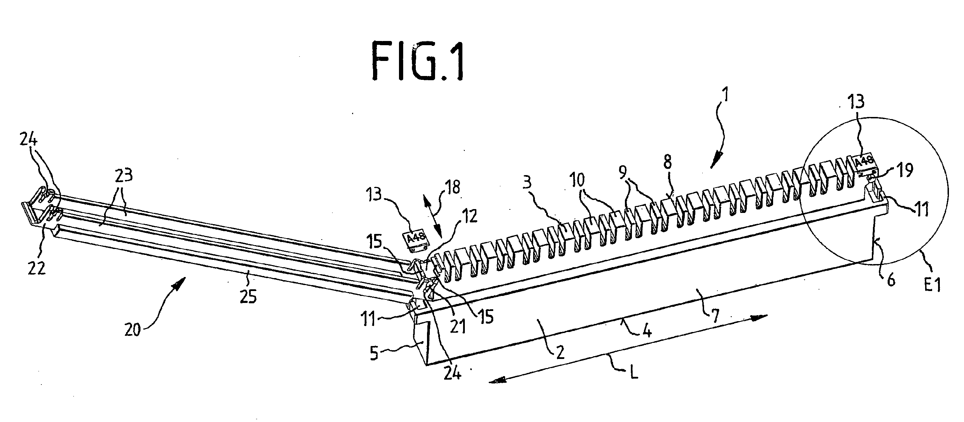

In der Fig. 1 ist eine Anschlussleiste 1 dargestellt. Die Anschlussleiste 1 umfasst ein ein- oder mehrteiliges Gehäuse 2, wobei das Gehäuse 2 vorzugsweise aus Kunststoff besteht. Die Anschlussleiste 1 weist eine Oberseite 3, eine Unterseite 4, eine linke Seitenfläche 5, eine rechte Seitenfläche 6, eine Vorderseite 7 und eine Rückseite 8 auf. Die Vorderseite 7 ist gestuft ausgebildet. An der Oberseite 3 ist die Anschlussleiste 1 mit Rippen 9, 10 ausgebildet, zwischen denen Schneid-Klemm-Kontakte angeordnet sind. Dabei liegt eine Rippe 9 zwischen zwei Schneid-Klemm-Kontakten eines zugeordneten Paares, wohingegen die Rippe 10 zwischen benachbarten Schneid-Klemm-Kontakten verschiedener Paare liegt. Dabei sind die Rippen 10 breiter als die Rippen 9, so dass das Übersprechen zwischen den Kontaktpaaren reduziert wird. An der linken und rechten Seitenfläche 5, 6 ist jeweils eine Drahtführung 11 angeordnet.

An der Oberseite 3 ist jeweils am linken und rechten Rand eine erste Schnittstelle 12 zur Aufnahme einer Steckziffer 13 angeordnet. Dabei ist die Steckziffer 13 in der linken Schnittstelle 12 herausgezogen und in der rechten Schnittstelle 12 gesteckt dargestellt.

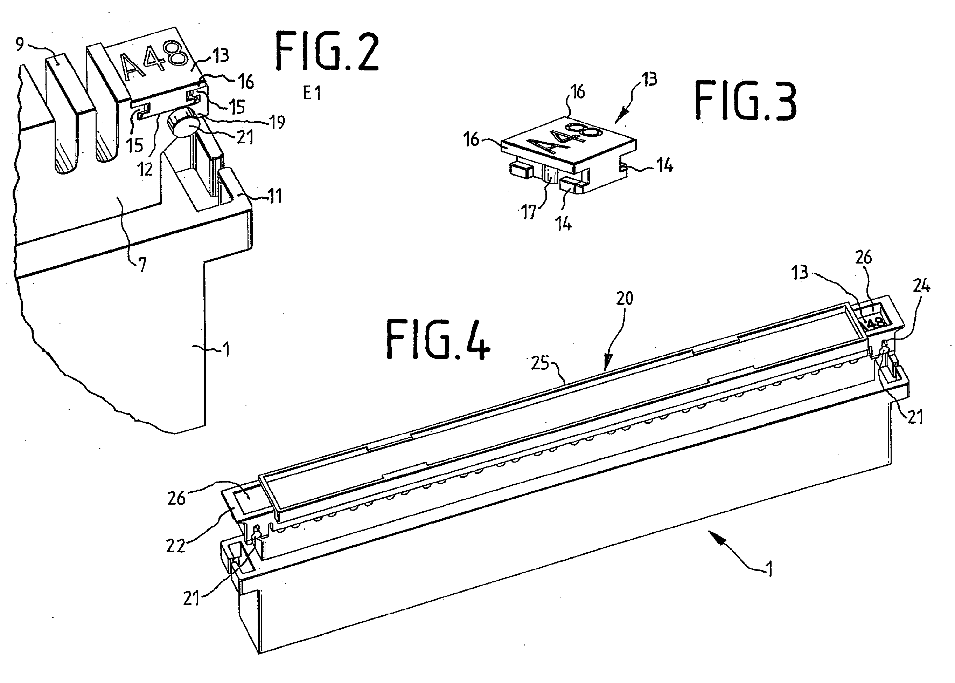

Die Steckziffer 13 weist im Wesentlichen einen T-förmigen Querschnitt auf (siehe Fig. 3). Seitlich sind an dem schmalen Fußende jeweils zwei Führungselemente 14 angeordnet. Die Schnittstelle 12 weist entsprechend zwei Kanten 15 auf. Beim Aufschieben der Steckziffer 13 gleiten die Führungselemente 14 unter den Kanten 15 und die breiten Kopfteile 16 über den Kanten 15 (siehe insbesondere Fig. 2). Zwischen den zwei Führungselementen 14 je Seite ist ein Rastelement 17 in Form einer Wölbung angeordnet, die beim Einschieben in eine entsprechende Vertiefung in der ersten Schnittstelle 12 einrastet. Die Einschubrichtung 18 der Steckziffer 13 ist dabei mit einem Doppelpfeil dargestellt, wobei die Steckziffer 13 sowohl von der Vorderseite 7 als auch von der Rückseite 8 aufgeschoben werden kann. Alternativ kann vorgesehen sein, dass die Steckrichtung senkrecht von oben erfolgt, die Steckrichtung also senkrecht zur Oberseite 3 ist.

Weiter weist die Anschlussleiste 1 zwei zweite Schnittstellen 19 zur Aufnahme eines Schilderrahmens 20 auf. Jede zweite Schnittstelle 19 wird durch zwei zylinderförmige Noppen 21 gebildet, die unterhalb der ersten Schnittstelle 12 an der Vorderseite 7 und der Rückseite 8 angeordnet sind, wobei die an der Rückseite 8 angeordneten Noppen in den Darstellungen nicht zu sehen sind. Die beiden Noppen 21 einer zweiten Schnittstelle 19 bilden dabei eine Schwenkachse für den Schilderrahmen 20, wobei die Schwenkachse senkrecht zur Längsrichtung L der Anschlussleiste 1 ist. Der Schilderrahmen 20 umfasst einen Grundkörper 22, der im Wesentlichen einen U-förmigen Querschnitt aufweist. Dabei weisen Schenkel 23 des Grundkörpers 22 an den Stirnseiten Aufnahmen 24 für die Noppen 21 auf. Auf dem Grundkörper 22 ist ein Trägerkörper 25 angeordnet, der im Wesentlichen auch einen U-förmigen Querschnitt aufweist. Zwischen Grundkörper 22 und Trägerkörper 25 kann dann beispielsweise ein Beschriftungsstreifen geschoben werden. Der Trägerkörper 25 ist kürzer als der Grundkörper 22, so dass an den Seiten der Grundkörper 22 nicht vom Trägerkörper 25 überdeckt wird. Diese nicht abgedeckten Bereiche stellen eine optische Freimachung 26 dar, durch die die Steckziffern 13 optisch erkennbar bleiben (siehe insbesondere Fig. 4), wenn der Schilderahmen 20 auf der Anschlussleiste 1 befestigt ist. Die optische Freimachung 26 kann dabei als Öffnung im Grundkörper 22 ausgebildet sein. Alternativ ist der Grundkörper 22 mindestens in diesem Bereich transparent und/oder weist eine linsenförmige Wölbung auf.

### Bezugszeichenliste

- 1: Anschlussleiste
- 2: Gehäuse
- 3: Oberseite
- 4: Unterseite
- 5: linke Seitenfläche
- 6: rechte Seitenfläche
- 7: Vorderseite
- 8: Rückseite
- 9, 10: Rippen
- 11: Drahtführung
- 12: erste Schnittstelle
- 13: Steckziffer
- 14: Führungselement
- 15: Kanten
- 16: Kopfteile
- 17: Rastelement
- 18: Einschubrichtung
- 19: zweite Schnittstelle
- 20: Schilderrahmen
- 21: Noppen
- 22: Grundkörper
- 23: Schenkel
- 24: Aufnahmen
- 25: Trägerkörper
- 26: optische Freimachung
- L: Längsachse

## Patentansprüche

1. Anschlussleiste (1) mit einem Schilderrahmen für die Telekommunikations- und Datentechnik, wobei die Anschlussleiste (1) mindestens eine erste Schnittstelle (12) zur Aufnahme einer Steckziffer (13) und mindestens eine zweite Schnittstelle (19) zur Aufnahme des Schilderrahmens (20) aufweist,
**dadurch gekennzeichnet, dass**
der Schilderrahmen (20) im befestigten Zustand auf der Anschlussleiste (1) oberhalb der Schnittstelle (12) zur Aufnahme einer Steckziffer (13) eine optische Freimachung (26) aufweist.

2. Anschlussleiste nach Anspruch 1, **dadurch gekennzeichnet, dass** die optische Freimachung (26) als transparentes Fenster oder als Öffnung ausgebildet ist.

3. Anschlussleiste nach Anspruch 2, **dadurch gekennzeichnet, dass** das transparente Fenster linsenförmig gewölbt ist.

4. Anschlussleiste nach einem der vorangegangenen Ansprüche, **dadurch gekennzeichnet, dass** die erste Schnittstelle (12) zur Aufnahme einer Steckziffer (13) mindestens eine Führung und/oder mindestens ein Rastmittel aufweist.

5. Anschlussleiste nach einem der vorangegangenen Ansprüche, **dadurch gekennzeichnet, dass** die zweite Schnittstelle (19) als mindestens ein zylinderförmiger oder polygoner Noppen (21) ausgebildet ist.

6. Anschlussleiste nach einem der vorangegangenen Ansprüche, **dadurch gekennzeichnet, dass** der Schilderrahmen (20) schwenkbar an der zweiten Schnittstelle (19) angelenkt ist.

7. Anschlussleiste nach Anspruch 6, **dadurch gekennzeichnet, dass** die Schwenkachse senkrecht zu einer Längsrichtung (L) der Anschlussleiste (1) steht.

8. Anschlussleiste nach einem der vorangegangenen Ansprüche, **dadurch gekennzeichnet, dass** die Anschlussleiste (1) mindestens zwei erste Schnittstellen (12) und/oder mindestens zwei zweite Schnittstellen (19) aufweist.

## Claims

1. Terminal block (1) having an inscription frame for telecommunications and data technology, wherein the terminal block (1) has at least one first interface (12) for holding a number flag (13) and at least one second interface (19) for holding the inscription frame (20), **characterized in that** the inscription frame (20), in the state in which it is fastened on the terminal block (1), has an optical aperture (26) above the interface (12) for holding a number flag (13).

2. Terminal block according to Claim 1, **characterized in that** the optical aperture (26) is in the form of a transparent window or in the form of an opening.

3. Terminal block according to Claim 2, **characterized in that** the transparent window is curved in the shape of a lens.

4. Terminal block according to one of the preceding claims, **characterized in that** the first interface (12) for holding a number flag (13) has at least one guide and/or at least one latching means.

5. Terminal block according to one of the preceding claims, **characterized in that** the second interface (19) is in the form of at least one cylindrical or polygonal stud (21).

6. Terminal block according to one of the preceding claims, **characterized in that** the inscription frame (20) is connected to the second interface (19) in an articulated manner such that it can pivot.

7. Terminal block according to Claim 6, **characterized in that** the pivot axis is perpendicular to a longitudinal direction (L) of the terminal block (1).

8. Terminal block according to one of the preceding claims, **characterized in that** the terminal block (1) has at least two first interfaces (12) and/or at least two second interfaces (19).

## Revendications

1. Réglette de raccordement (1) comprenant un cadre de protection pour la technique de télécommunications et de données, la réglette de raccordement (1) présentant au moins une première interface (12) pour recevoir un numéro enfichable (13) et au moins une deuxième interface (19) pour recevoir le cadre de protection (20),
**caractérisée en ce que**
le cadre de protection (20), dans l'état fixé sur la réglette de raccordement (1), présente, au dessus de l'interface (12) pour recevoir un numéro enfichable (13), une baie optique (26).

2. Réglette de raccordement selon la revendication 1, **caractérisée en ce que** la baie optique (26) est réalisée sous forme de fenêtre transparente ou sous forme d'ouverture.

3. Réglette de raccordement selon la revendication 2, **caractérisée en ce que** la fenêtre transparente est courbée en forme de lentille.

4. Réglette de raccordement selon l'une quelconque des revendications précédentes, **caractérisée en ce que** la première interface (12) pour recevoir un numéro enfichable (13) présente au moins un guide et/ou au moins un moyen d'encliquetage.

5. Réglette de raccordement selon l'une quelconque des revendications précédentes, **caractérisée en ce que** la deuxième interface (19) est réalisée sous forme d'au moins un plot de forme cylindrique ou polygonale (21).

6. Réglette de raccordement selon l'une quelconque des revendications précédentes, **caractérisée en ce que** le cadre de protection (20) est articulé de manière pivotante à la deuxième interface (19).

7. Réglette de raccordement selon la revendication 6, **caractérisée en ce que** l'axe de pivotement est perpendiculaire à une direction longitudinale (L) de la réglette de raccordement (1).

8. Réglette de raccordement selon l'une quelconque des revendications précédentes, **caractérisée en ce que** la réglette de raccordement (1) présente au moins deux premières interfaces (12) et/ou au moins deux deuxièmes interfaces (19).
